# EUROPEAN PATENT SPECIFICATION

(11) **EP 1 144 466 B1**
(45) Date of publication and mention of the grant of the patent: **16.03.2005**
(21) Application number: 99965056.7
(22) Date of filing: 29.11.1999
(51) Int. Cl.: C08F 10/00, C08F 2/38, C08F 2/40, C08F 2/42, C08F 2/00

(54) **A CATALYST COMPOSITION AND METHODS FOR ITS PREPARATION AND USE IN A POLYMERIZATION PROCESS**
KATALYSATORSYSTEM UND VERFAHREN ZUR DESSEN HERSTELLUNG UND DESSEN VERWENDUNG IN EINEM POLYMERISATIONSVERFAHREN
COMPOSITION CATALYTIQUE ET SES PROCEDES DE PREPARATION ET D'UTILISATION DANS UN PROCESSUS DE POLYMERISATION

(30) Priority: 17.12.1998 US 215432; 09.09.1999 US 392421; 09.09.1999 US 392417
(43) Date of publication of application: 17.10.2001
(60) Divisional application: 04028221.2
(73) Proprietor: Univation Technologies LLC, Houston, TX 77056 (US)
(72) Inventor: WENZEL, Timothy, T., Charleston, WV 25302 (US)
(74) Representative: Hucker, Charlotte Jane
(86) International application number: PCT/US1999/028193
(87) International publication number: WO 2000/035968

(56) References cited:
- EP-A- 0 544 919
- EP-A- 0 630 910
- US-A- 3 919 292
- US-A- 5 066 736
- US-A- 5 324 879

## Description

### FIELD OF THE INVENTION

The present invention relates to a process for polymerizing olefins.

### BACKGROUND OF THE INVENTION

Advances in polymerization and catalysis have resulted in the capability to produce many new polymers having improved physical and chemical properties useful in a wide variety of superior products and applications. With the development of new catalysts the choice of polymerization-type (solution, slurry, high pressure or gas phase) for producing a particular polymer has been greatly expanded. Also, advances in polymerization technology have provided more efficient, highly productive and economically enhanced processes. Especially illustrative of these advances is the development of technology utilizing bulky ligand metallocene-type catalyst systems. Regardless of these technological advances in the polyolefin industry, common problems, as well as new challenges associated with process operability still exist. For example, the tendency for a gas phase or slurry phase process to foul and/or sheet remains a challenge.

For example, in a continuous slurry process fouling on the walls of the reactor, which act as a heat transfer surface, can result in many operability problems. Poor heat transfer during polymerization can result in polymer particles adhering to the walls of the reactor. These polymer particles can continue to polymerize on the walls and can result in a premature reactor shutdown. Also, depending on the reactor conditions, some of the polymer may dissolve in the reactor diluent and redeposit on for example the metal heat exchanger surfaces.

In a typical continuous gas phase process, a recycle system is employed for many reasons including the removal of heat generated in the process by the polymerization. Fouling, sheeting and/or static generation in a continuous gas phase process can lead to the ineffective operation of various reactor systems. For example, the cooling mechanism of the recycle system, the temperature probes utilized for process control and the distributor plate, if affected, can lead to an early reactor shutdown.

Evidence of, and solutions to, various process operability problems have been addressed by many in the art. For example, U.S. Patent Nos. 4,792,592, 4,803,251, 4,855,370 and 5,391,657 all discuss techniques for reducing static generation in a polymerization process by introducing to the process for example, water, alcohols, ketones, and/or inorganic chemical additives; European Patent EP 0 634 421 B1 discusses introducing directly into the polymerization process water, alcohol and ketones to reduce fouling. A PCT publication WO 97/14721 published April 24, 1997 discusses the suppression of fines that can cause sheeting by adding an inert hydrocarbon to the reactor; U.S. Patent No. 5,627,243 discusses a new type of distributor plate for use in fluidized bed gas phase reactors; PCT publication WO 96/08520 discusses avoiding the introduction of a scavenger into the reactor; U.S. Patent No. 5,461,123 discusses using sound waves to reduce sheeting; U.S. Patent No. 5,066,736 and EP-A1 0 549 252 discuss the introduction of an activity retarder to the reactor to reduce agglomerates; U.S. Patent No. 5,610,244 relates to feeding make-up monomer directly into the reactor above the bed to avoid fouling and improve polymer quality; U.S. Patent No. 5,126,414 discusses including an oligomer removal system for reducing distributor plate fouling and providing for polymers free of gels; EP-A1 0 453 116 published October 23, 1991 discusses the introduction of antistatic agents to the reactor for reducing the amount of sheets and agglomerates; U.S. Patent No. 4,012,574 discusses adding a surface-active compound, a perfluorocarbon group, to the reactor to reduce fouling; U.S. Patent 5,026,795 discusses the addition of an antistatic agent with a liquid carrier to the polymerization zone in the reactor; U.S. Patent No. 5,410,002 discusses using a conventional Ziegler-Natta titanium/magnesium supported catalyst system where a selection of antistatic agents are added directly to the reactor to reduce fouling; U.S. Patent Nos. 5,034,480 and 5,034,481 discuss a reaction product of a conventional Ziegler-Natta titanium catalyst with an antistat to produce ultrahigh molecular weight ethylene polymers; U.S. Patent No. 3,082,198 discusses introducing an amount of a carboxylic acid dependent on the quantity of water in a process for polymerizing ethylene using a titanium/aluminum organometallic catalysts in a hydrocarbon liquid medium; and U.S. Patent No. 3,919,185 describes a slurry process using a nonpolar hydrocarbon diluent using a conventional Ziegler-Natta-type or Phillips-type catalyst and a polyvalent metal salt of an organic acid having a molecular weight of at least 300.

There are various other known methods for improving operability including coating the polymerization equipment, for example, treating the walls of a reactor using chromium compounds as described in U.S. Patent Nos. 4,532,311 and 4,876,320; injecting various agents into the process, for example PCT Publication WO 97/46599 published December 11, 1997 discusses feeding into a lean zone in a polymerization reactor an unsupported, soluble metallocene-type catalyst system and injecting antifoulants or antistatic agents into the reactor; controlling the polymerization rate, particularly on start-up; and reconfiguring the reactor design.

Others in the art to improve process operability have discussed modifying the catalyst system by preparing the catalyst system in different ways. For example, methods in the art include combining the catalyst system components in a particular order; manipulating the ratio of the various catalyst system components; varying the contact time and/or temperature when combining the components of a catalyst system; or simply adding various compounds to the catalyst system. These techniques or combinations thereof are discussed in the literature. Especially illustrative in the art is the preparation procedures and methods for producing metallocene-type catalyst systems, more particularly supported metallocene-type catalyst systems with reduced tendencies for fouling and better operability. Examples of these include: WO 96/11961 published April 26, 1996 discusses as a component of a supported catalyst system an antistatic agent for reducing fouling and sheeting in a gas, slurry or liquid pool polymerization process; U.S. Patent No. 5,283,218 is directed towards the prepolymerization of a metallocene catalyst; U.S. Patent No. 5,332,706 and 5,473,028 have resorted to a particular technique for forming a catalyst by incipient impregnation; U.S. Patent Nos. 5,427,991 and 5,643,847 describe the chemical bonding of non-coordinating anionic activators to supports; U.S. Patent No. 5,492,975 discusses polymer bound metallocene-type catalyst systems; U.S Patent No. 5,661,095 discusses supporting a metallocene-type catalyst on a copolymer of an olefin and an unsaturated silane; PCT publication WO 97/06186 published February 20, 1997 teaches removing inorganic and organic impurities after formation of the metallocene-type catalyst itself; PCT publication WO 97/15602 published May 1, 1997 discusses readily supportable metal complexes; PCT publication WO 97/27224 published July 31, 1997 relates to forming a supported transition metal compound in the presence of an unsaturated organic compound having at least one terminal double bond; and EP-A2-811 638 discusses using a metallocene catalyst and an activating cocatalyst in a polymerization process in the presence of a nitrogen containing antistatic agent.

While all these possible solutions might reduce the level of fouling or sheeting somewhat, some are expensive to employ and/or may not reduce fouling and sheeting to a level sufficient to successfully operate a continuous process, particularly a commercial or large-scale process.

Thus, it would be advantageous to have a polymerization process capable of operating continuously with enhanced reactor operability and at the same time produce new and improved polymers. It would also be highly beneficial to have a continuously operating polymerization process having more stable catalyst productivities, reduced fouling/sheeting tendencies and increased duration of operation.

### SUMMARY OF THE INVENTION

This invention provides a process for polymerizing olefin(s) as defined in claim 1.

### DETAILED DESCRIPTION OF THE INVENTION

### Introduction

The invention relates to a polymerization process having improved operability and product capabilities. It has been suprisingly discovered that using a carbonyl compound in combination with a catalyst composition comprising a metallocene polymerization catalyst and an activator results in a substantially improved polymerization process. Particularly surprising is where the catalyst system is supported on carrier.

Utilizing the polymerization catalysts described below in combination with a carbonyl compound results in a substantial improvement in process operability, a significant reduction in sheeting and fouling, improved catalyst performance, better polymer particle, and the capability to produce a broader range of polymers.

### Metallocene-Type Catalyst Compounds

Generally, metallocene-type catalyst compounds include half and full sandwich compounds having one or more ligands bonded to at least one metal atom. Typical metallocene-type compounds are generally described as containing one or more ligand(s) and one or more leaving group(s) bonded to at least one metal atom. For the purposes of this patent specification and appended claims the term "leaving group" is any ligand that can be abstracted from a metallocene-type catalyst compound to form a metallocene-type catalyst cation capable of polymerizing one or more olefins.

The ligands are generally represented by one or more open or fused ring(s) or ring system(s) or a combination thereof. These ring(s) or ring system(s) are typically composed of atoms selected from Groups 13 to 16 atoms, preferably the atoms are selected from the group consisting of carbon, nitrogen, oxygen, silicon, sulfur, phosphorous, boron and aluminum or a combination thereof. Most preferably the ring(s) or ring system(s) are composed of carbon atoms such as but not limited to those cyclopentadienyl ligands or cyclopentadienyl-type ligand structures or other similar functioning ligand structure such as a pentadiene, a cyclooctatetraendiyl or an imide ligand. The metal atom is preferably selected from Groups 3 through 16 and the lanthanide or actinide series of the Periodic Table of Elements. Preferably the metal is a transition metal from Groups 4 through 12, more preferably 4, 5 and 6, and most preferably the metal is from Group 4.

In one embodiment, the metallocene-type catalyst compounds of the invention are represented by the formula:

L^{A}L^{B}MQₙ (I)

where M is a metal atom from the Periodic Table of the Elements and may be a Group 3 to 12 metal or from the lanthanide or actinide series of the Periodic Table of Elements, preferably M is a Group 4, 5 or 6 transition metal, more preferably M is a Group 4 transition metal, even more preferably M is zirconium, hafnium or titanium.

The ligands, L^{A} and L^{B}, are open or fused ring(s) or ring system(s) such as unsubstituted or substituted, cyclopentadienyl ligands or cyclopentadienyl-type ligands, heteroatom substituted and/or heteroatom containing cyclopentadienyl-type ligands. Non-limiting examples of ligands include cyclopentadienyl ligands, indenyl ligands, benzindenyl ligands, fluorenyl ligands, octahydrofluorenyl ligands, cyclooctatetraendiyl ligands, azenyl ligands, azulene ligands, pentalene ligands, phosphoyl ligands, pyrrolyl ligands, pyrozolyl- ligands, carbazolyl ligands, borabenzene ligands and the like, including hydrogenated versions thereof, for example tetrahydroindenyl ligands. In one embodiment, L^{A} and L^{B} may be any other ligand structure capable of η-5 bonding to M. In another embodiment, L^{A} and L^{B} may comprise one or more heteroatoms, for example, nitrogen, silicon, boron, germanium, sulfur and phosphorous, in combination with carbon atoms to form an open, or preferably a fused, ring or ring system, for example, a hetero-eyclopentadienyl ancillary ligand. Other L^{A} and L^{B} bulky ligands include but are not limited to bulky amides, phosphides, alkoxides, aryloxides, imides, carbolides, borollides, porphyrins, phthalocyanines, corrins and other polyazomacrocycles. Independently, each L^{A} and L^{B} may be the same or different type of bulky ligand that is bonded to M. In one embodiment in formula (I) only one of either L^{A} or L^{B} is present.

Independently, each L^{A} and L^{B} may be unsubstituted or substituted with a combination of substituent groups R. Non-limiting examples of substituent groups R include one or more from the group selected from hydrogen, or linear, branched, cyclic alkyl radicals, or alkenyl, alkynl or aryl radicals, or combination thereof. In a preferred embodiment, substituent groups R have up to 50 non-hydrogen atoms, preferably from 1 to 30 carbon atoms that can also be substituted with halogens or heteroatoms. Non-limiting examples of alkyl substituents R include methyl, ethyl, propyl, butyl, pentyl, hexyl, cyclopentyl, cyclohexyl, benzyl or phenyl groups, including all their isomers, for example tertiary butyl, isopropyl. Other hydrocarbyl radicals include fluoromethyl, fluroethyl, difluroethyl, iodopropyl, bromohexyl, chlorobenzyl and hydrocarbyl substituted organometalloid radicals including trimethylsilyl, trimethylgermyl, methyldiethylsilyl; and halocarbyl-substituted organometalloid radicals including tris(trifluoromethyl)-silyl, methyl-bis(difluoromethyl)silyl, bromomethyldimethylgermyl; and disubstitiuted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, boron, aluminum, nitrogen, phosphorous, oxygen, tin, sulfur, germanium including olefins such as but not limited to olefinically unsaturated substituents including vinyl-terminated ligands, for example but-3-enyl, prop-2-enyl, hex-5-enyl. Also, at least two R groups, preferably two adjacent R groups, are joined to form a ring structure having from 3 to 30 atoms selected from carbon, nitrogen, oxygen, phosphorous, silicon, germanium, aluminum, boron or a combination thereof. Also, a substituent group R group such as 1-butanyl may form a carbon sigma bond to the metal M.

Other ligands may be bonded to the metal M, such as at least one leaving group Q. In one embodiment, Q is a monoanionic labile ligand having a sigma-bond to M. Depending on the oxidation state of the metal, the value for n is 0, 1 or 2 such that formula (I) above represents a neutral metallocene-type catalyst compound.

Non-limiting examples of Q ligands include weak bases such as amines, phosphines, ethers, carboxylates, dienes, hydrocarbyl radicals having from 1 to 20 carbon atoms, hydrides or halogens or a combination thereof. In another embodiment, two or more Q's form a part of a fused ring or ring system. Other examples of Q ligands include those substituents for R as described above and including cyclobutyl, cyclohexyl, heptyl, tolyl, trifluromethyl, tetramethylene, pentamethylene, methylidene, methyoxy, ethyoxy, propoxy, phenoxy, bis(N-methylanilide), dimethylamide, and dimethylphosphide radicals.

In one embodiment, the metallocene-type catalyst compounds of the invention include those of formula I where L^{A} and L^{B} are bridged to each other by a bridging group, A. These bridged compounds are known as bridged metallocene-type catalyst compounds. Non-limiting examples of bridging group A include bridging groups containing at least one Group 13 to 16 atom, often referred to a divalent moiety such as but not limited to at least one of a carbon, oxygen, nitrogen, silicon, boron, germanium and tin atom or a combination thereof. Preferably bridging group A contains a carbon, silicon or germanium atom, most preferably A contains at least one silicon atom or at least one carbon atom. The bridging group A may also contain substituent groups R as defined above including halogens.

In another embodiment, the metallocene-type catalyst compound of the invention is represented by the formula:

(C₅H_{4-d}R_{d}) Aₓ (C₅H_{4-d}R_{d}) M Qg-₂ (II)

where M is a Group 4, 5, 6 transition metal, (C₅H_{4-d}R_{d}) is an unsubstituted or substituted, cyclopentadienyl ligand or cyclopentadienyl-type ligand bonded to M, each R, which can be the same or different, is hydrogen or a substituent group containing up to 50 non-hydrogen atoms or substituted or unsubstituted hydrocarbyl having from 1 to 30 carbon atoms or combinations thereof, or two or more carbon atoms are joined together to form a part of a substituted or unsubstituted ring or ring system having 4 to 30 carbon atoms, A is one or more of, or a combination of, carbon, germanium, boron, silicon, tin, phosphorous or nitrogen atom containing radical bridging two (C₅H_{4-d}R_{d}) rings; more particularly, non-limiting examples of bridging group A may be represented by R'₂C, R'₂Si, R'₂Si R'₂Si, R'₂Si R'₂C, R'₂Ge, R'₂Si R'₂Ge, R'₂GeR'₂C, R'N, R'P, R',C R'N, R'₂C R'P, R'₂Si R'N, R'₂Si R'P, R'₂GeR'N, R'₂Ge R'P, where R' is independently, a radical group which is hydride, hydrocarbyl, substituted hydrocarbyl, halocarbyl, substituted halocarbyl, hydrocarbyl-substituted organometalloid, halocatbyl-substituted organometalloid, disubstituted boron, disubstituted pnictogen, substituted chalcogen, or halogen or two or more R' may be joined to form a ring or ring system; and independently, each Q can be the same or different is a hydride, substituted or unsubstituted, linear, cyclic or branched, hydrocarbyl having from 1 to 30 carbon atoms, halogen, alkoxides, aryloxides, amides, phosphides, or any other univalent anionic ligand or combination thereof; also, two Q's together may form an afkylidene ligand or cyclometallated hydrocarbyl ligand or other divalent anionic chelating ligand, where g is an integer corresponding to the formal oxidation state of M, and d is an integer selected from 0, 1, 2, 3 or 4 and denoting the degree of substitution, x is an integer from 0 to 1.

In one embodiment, the metallocene-type catalyst compounds are those where the R substituents on the ligands L^{A}, L^{B}, (C₅H_{4-d}R_{d}) of formulas (I) and (II) are substituted with the same or different number of substituents on each of the ligands. In another embodiment, the ligands L^{A}, L^{B}, (C₅H_{4-d}R_{d}) of formulas (I) and (II) are different from each other.

Other metallocene-type catalysts compounds useful in the invention include bridged heteroatom, mono-ligand metallocene-type compounds. These types of catalysts and catalyst systems are described in, for example, PCT publication WO 92/00333, WO 94/07928, WO 91/ 04257, WO 94/03506, WO96/00244 and WO 97/15602 and U.S. Patent Nos. 5,057,475, 5,096,867, 5,055,438, S,198,401, 5,227,440 and 5,264,405 and European publication EP-A-0 420 436. Other metallocene-type catalyst compounds and catalyst systems useful in the invention may include those described in U.S. Patent Nos. 5,064,802, 5,145,819, 5,149,819, 5,243,001, 5,239,022, 5,276,208, 5,296,434, 5,321,106, 5,329,031, 5,304,614, 5,677,401, 5,723,398 and 5,753,578 and PCT publications WO 93/08221, WO 93/08199, WO 95/07140, WO 98/11144 and European publications EP-A-0 578 838, EP-A-0 638 595, EP-B-0 513 380, EP-A1-0 816 372, EP-A2-0 839 834 and EP-B1-0 632 819.

In another embodiment, the metallocene-type catalyst compound is represented by the formula:

L^{C}AJMQₙ (III)

where M is a Group 3 to 16 metal atom or a metal selected from the Group of actinides and lanthanides of the Periodic Table of Elements, preferably M is a Group 4 to 12 transition metal, and more preferably M is a Group 4, 5 or 6 transition metal, and most preferably M is a Group 4 transition metal in any oxidation state, especially titanium; L^{C} is a substituted or unsubstituted ligand bonded to M; J is bonded to M; A is bonded to M and J; J is a heteroatom ancillary ligand; and A is a bridging group; Q is a univalent anionic ligand; and n is the integer 0,1 or 2. In formula (III) above, L^{C}, A and J form a fused ring system. In an embodiment, L^{C} of formula (III) is as defined above for L^{A} in formula (I), and A, M and Q of fonnula (III) are as defined above in formula (I).

In another embodiment of this invention the metallocene-type catalyst compound useful in the invention is represented by the formula:

(C₅H_{5-y-x}Rₓ) (A_{y}) (JR'_{z-1-y}) M (Q)ₙ (L')_{w} (IV)

where M is a transition metal from Group 4 in any oxidation state, preferably, titanium, zirconium or hafnium, most preferably titanium in either a +2, +3 or +4 oxidation state. A combination of compounds represented by formula (IV) with the transition metal in different oxidation states is also contemplated. L^{C} is represented by (C₅H_{5-y-x}Rₓ) and is a ligand as described above. More particularly (C₅H_{5-y-x}Rₓ) is a cyclopentadienyl ring or cyclopentadienyl-type ring or ring system which is substituted with from 0 to 5 substituent groups R, and "x" is 0, 1,2, 3 or 4 denoting the degree of substitution. Each R is, independently, a radical selected from a group consisting of 1 to 30 non-hydrogen atoms. More particularly, R is a hydrocarbyl radical or a substituted hydrocarbyl radical having from 1 to 30 carbon atoms, or a hydrocarbyl-substituted metalloid radical where the metalloid is a Group 14 or 15 element, preferably silicon or nitrogen or a combination thereof, and halogen radicals and mixtures thereof. Substituent R groups also include silyl, germyl, amine, and hydrocarbyloxy groups and mixtures thereof. Also, in another embodiment, (C₅H_{5-y-x}Rₓ) is a cyclopentadienyl ligand in which two R groups, preferably two adjacent R groups are joined to form a ring or ring system having from 3 to 50 atoms, preferably from 3 to 30 carbon atoms. This ring system may form a saturated or unsaturated polycyclic cyclopentadienyl-type ligand such as those ligands described above, for example, indenyl, tetrahydroindenyl, fluorenyl or octahydrofluorenyl.

The (JR'_{z-1-y}) of formula (IV) is a heteroatom containing ligand in which J is an element with a coordination number of three from Group 15 or an element with a coordination number of two from Group 16 of the Periodic Table of Elements. Preferably J is a nitrogen, phosphorus, oxygen or sulfur atom with nitrogen being most preferred. Each R' is, independently, a radical selected from the group consisting of hydrocarbyl radicals having from 1 to 20 carbon atoms, or as defined for R in formula (I) above. The "y" is 0 or 1, and the "z" is the coordination number of the element J. In one embodiment, in formula (IV), the J of formula (III) is represented by (JR'_{z-1-y}).

In formula (IV) each Q is, independently, any univalent anionic ligand such as halogen, hydride, or substituted or unsubstituted hydrocarbyl having from 1 to 30 carbon atoms, alkoxide, aryloxide, sulfide, silyl, amide or phosphide. Q may also include hydrocarbyl groups having ethylenic unsaturation thereby forming a η³ bond to M. Also, two Q's may be an alkylidene, a cyclometallated hydrocarbyl or any other divalent anionic chelating ligand. The integer n may be 0, 1, 2 or 3.

The A of formula (IV) is a covalent bridging group containing a Group 13 to 16 element, preferably a Group 14 and 15 element, most preferably a Group 14 element. Non-limiting examples of bridging group A include a dialkyl, alkylaryl or diaryl silicon or germanium radical, alkyl or aryl phosphine or amine radical, or a hydrocarbyl radical such as methylene, ethylene.

Optionally associated with formula (IV) is L', a Lewis base such as diethylether, tetraethylammonium chloride, tetrahydrofuran, dimethylaniline, aniline, trimethylphosphine, n-butytamine; and w is a number from 0 to 3. Additionally. L' may be bonded to any of R, R' or Q and n is 0, 1, 2 or 3.

In another embodiment, the metallocene-type catalyst compound is a complex of a metal, preferably a transition metal, a ligand, preferably a substituted or unsubstituted pi-bonded ligand, and one or more heteroally moieties, such as those described in U.S. Patent Nos. 5,527,752 and 5,747,406 and EP-B1-0 735 057.

In an embodiment, the metallocene-type catalyst compound is represented by the formula:

L^{D}MQ₂(YZ)Aₙ (V)

where M is a Group 3 to 16 metal, preferably a Group 4 to 12 transition metal, and most preferably a Group 4, 5 or 6 transition metal; L^{D} is a substituted or unsubstituted ligand that is bonded to M; each Q is independently bonded to M and Q₂(YZ) forms a unicharged polydentate ligand; A or Q is a univalent anionic ligand also bonded to M; n is 1 or 2.

In another embodiment, M is a Group 4, 5 or 6 transition metal, preferably from Group 4, more preferably titanium, zirconium and hafnium, and most preferably zirconium; L^{D} is selected from the group of ligands consisting of cyclopentadienyl, indenyl, tetrahydroindenyl, benzindenyl, fluorenyl, octahydrofluorenyl, cyclooctatetraendiyl and including those ligands described above for L^{A} of formula (I); Q is selected from the group consisting of -O-, -NR-; -CR₂- and -S-; Y is either C or S; Z is selected from the group consisting of -OR, -NR₂, -CR₃, -SR, -SiR₃, -PR₂, -H, and substituted or unsubstituted aryl groups, with the proviso that when Q is -NR- then Z is selected from one of the group consisting of -OR, -NR₂, -SR, -SiR₃, -PR₂ and -H; R is selected from a group containing carbon, silicon, nitrogen, oxygen, and/or phosphorus, preferably where R is a hydrocarbon group containing from 1 to 20 carbon atoms, most preferably an alkyl, cycloalkyl, or an aryl group; n is an integer from 1 to 4, preferably 1 or 2; A is a univalent anionic group when n is 2 or A is a divalent anionic group when n is 1; preferably A is a carbamate, carboxylate, or other heteroallyl moiety described by the Q, Y and Z combination. In another embodiment of formula (V), optionally, Tₘ is a bridging group bonded to L^{D} and another L^{D} of another L^{D}MQ₂YZAₙ compound, where m is an integer from 2 to 7, preferably 2 to 6, most preferably 2 or 3; and T is selected from the group consisting of alkylene and arylene groups containing from 1 to 10 carbon atoms optionally substituted with carbon or heteroatom(s), germanium, silicon and alkyl phosphine.

In another embodiment of the invention, the metallocene-type catalyst compounds are heterocyclic ligand complexes where the ligands, the ring(s) or ring system(s), include one or more heteroatoms or a combination thereof. Non-limiting examples of heteroatoms include a Group 13 to 16 element, preferably nitrogen, boron, sulfur, oxygen, aluminum, silicon, phosphorous and tin. Examples of these metallocene-type catalyst compounds are described in WO 96/33202, WO 96/34021, WO 97/17379 and WO 98/22486 and U.S. Patent No. 5,637,660, 5,539,124, 5,554,775, 5,756,611, 5,233,049 and 5,744,417.

In another embodiment, the metallocene-type catalyst compounds are those complexes known as transition metal catalysts based on bidentate ligands containing pyridine or quinoline moieties.

In one embodiment, the metallocene-type catalyst compound is represented by the formula:

((Z)XAₜ(YJ))_{q}MQₙ (VI)

where M is a metal selected from Group 3 to 13 or lanthanide and actinide series of the Periodic Table of Elements; Q is bonded to M and each Q is a monovalent, bivalent, or trivalent anion; X and Y are bonded to M; one or more of X and Y are heteroatoms, preferably both X and Y are heteroatoms; Y is contained in a heterocyclic ring J, where J comprises from 2 to 50 non-hydrogen atoms, preferably 2 to 30 carbon atoms; Z is bonded to X, where Z comprises 1 to 50 non-hydrogen atoms, preferably 1 to 50 carbon atoms, preferably Z is a cyclic group containing 3 to 50 atoms, preferably 3 to 30 carbon atoms; t is 0 or 1; when t is 1, A is a bridging group joined to at least one of X,Y or 3, preferably X and J; q is 1 or 2; n is an integer from 1 to 4 depending on the oxidation state of M. In one embodiment, where X is oxygen or sulfur then Z is optional. In another embodiment, where X is nitrogen or phosphorous then Z is present. In an embodiment, Z is preferably an aryl group, more preferably a substituted aryl group.

In another embodiment, these metallocene-type catalyst compounds are represented by the formula:

((R'ₘZ)XAₜ(YJR"ₘ))_{q}MQₙ (VII)

where M is a metal selected from Group 3 to 13 of the Periodic Table of Elements, preferably a Group 4 to 12 transition metal, more preferably a Group 4, 5 or 6 transition metal, even more preferably a Group 4 transition metal such as titanium, zirconium or hafnium, and most preferably zirconium;

Each Q is bonded to M and each Q is a monovalent, bivalent, or trivalent anion. Preferably each Q is independently selected from the group consisting of halogens, hydrogen, alkyl, aryl, alkenyl, alkylaryl, arylalkyl, hydrocarboxy or phenoxy radicals having 1-20 carbon atoms. Each Q may also be amides, phosphides, sulfides, silylalkyls, diketonates, and carboxylates. Optionally, each Q may contain one or more heteroatoms, more preferably each Q is selected from the group consisting of halides, alkyl radicals and arylalkyl radicals. Most preferably, each Q is selected from the group consisting of arylalkyl radicals such as benzyl.

X and Y are preferably each heteroatoms, more preferably independently selected from the group consisting of nitrogen, oxygen, sulfur and phosphorous, even more preferably nitrogen or phosphorous, and most preferably nitrogen;

Y is contained in a heterocyclic ring or ring system J. J contains from 2 to 30 carbon atoms, preferably from 2 to 7 carbon atoms, more preferably from 3 to 6 carbon atoms, and most preferably 5 carbon atoms. Optionally, the heterocyclic ring J containing Y, may contain additional heteroatoms. J may be substituted with R" groups that are independently selected from the group consisting of hydrogen or linear, branched, cyclic, alkyl radicals, or alkenyl, alkynl, alkoxy, aryl or aryloxy radicals. Also, two or more R" groups may be joined to form a cyclic moiety such as an aliphatic or aromatic ring. Preferably R" is hydrogen or an aryl group, most preferably R" is hydrogen. When R" is an aryl group and Y is nitrogen, a quinoline group is formed. Optionally, an R" may be joined to A;

Z is a hydrocarbyl group bonded to X, preferably Z is a hydrocarbyl group of from 1 to 50 carbon atoms, preferably Z is a cyclic group having from 3 to 30 carbon atoms, preferably Z is a substituted or unsubstituted cyclic group containing from 3 to 30 carbon atoms, optionally including one or more heteroatoms, more preferably Z is an aryl group, most preferably a substituted aryl group;

Z may be substituted with R' groups that are independently selected from group consisting of hydrogen or linear, branched, alkyl radicals or cyclic alkyl, alkenyl, alkynl or aryl radicals. Also, two or more R' groups may be joined to form a cyclic moiety such as an aliphatic or aromatic ring. Preferably R' is an alkyl group having from 1 to 20 carbon atoms, more preferably R' is methyl, ethyl, propyl, butyl, pentyl including isomers thereof, more preferably R' is a secondary or tertiary hydrocarbon, including isopropyl, t-butyl, most preferably R' is an isopropyl group. Optionally, an R' group may be joined to A. It is preferred that at least one R' is ortho to X;

When t is 1, A is a bridging group joined to at least one of, preferably both of, X and J. Bridging group A contains one or more Group 13 to 16 elements from Periodic Table of Elements. More preferably A contains one or more Group 14 elements, most preferably A is a substituted carbon group, a di-substituted carbon group or vinyl group; and

In formula (VII) m is independently an integer from 0 to 5, preferably 2; n is an integer from 1 to 4 and typically depends on the oxidation state of M; and q is 1 or 2, and where q is 2, the two ((R'ₘZ)XA(YJR"ₘ)) of formula (VII) are bridged to each other via a bridging group, preferably a bridging group containing a Group 14 element. Also, in a preferred embodiment, the compound represented by formula (VI) or (VII) may be contacted with acetone.

### Other Metallocene-Type Catalyst Compounds

It is within the scope of this invention, in one embodiment, that the bulky ligand metallocene-type catalyst compounds include complexes of Ni²⁻ and Pd²⁺ described in the articles Johnson, et al., "New Pd(II)- and Ni(II)- Based Catalysts for Polymerization of Ethylene and a-Olefins", J. Am. Chem. Soc. 1995, 117, 6414-6415 and Johnson, et al., "Copolymerization of Ethylene and Propylene with Functionalized Vinyl Monomers by Palladium(II) Catalysts", J. Am. Chem. Soc., 1996, 118,267-268, and WO 96/23010 published August 1, 1996. These complexes can be either dialkyl ether adducts, or alkylated reaction products of the described dihalide complexes that can be activated to a cationic state by the activators of this invention described below.

Also included as metallocene-type catalyst are those diimine based ligands of Group 8 to 10 metal compounds disclosed in PCT publications WO 96/23010 and WO 97/48735 and Gibson, et. al., Chem. Comm., pp. 849-850 (1998), all of which are herein incorporated by reference.

Other metallocene-type catalysts are those Group 5 and 6 metal imido complexes described in EP-A2-0 816 384. In addition, bulky ligand metallocene-type catalysts include bridged bis(arylamido) Group 4 compounds described by D.H. McConville, et al., in Organometallics 1195, 14, 5478-5480.

It is also contemplated that in one embodiment, the metallocene-type catalysts of the invention described above include their structural or optical or enantiomeric isomers (meso and racemic isomers) and mixtures thereof.

### Activator and Activation Methods for the Metallocene-Type Catalyst Compounds

The above described metallocene-type catalyst compounds having a least one fluoride leaving group or a fluorine containing leaving group are typically activated in various ways to yield catalyst compounds having a vacant coordination site that will coordinate, insert, and polymerize olefin(s).

For the purposes of this patent specification and appended claims, the term "activator" is defined to be any compound or component or method which can activate any of the metallocene-type catalyst compounds of the invention as described above. Non-limiting activators, for example may include a Lewis acid or a non-coordinating ionic activator or ionizing activator or any other compound including Lewis bases, aluminum alkyls, conventional-type cocatalysts and combinations thereof that can convert a neutral metallocene-type catalyst compound to a catalytically active metallocene cation. It is within the scope of this invention to use alumoxane or modified alumoxane as an activator, and/or to also use ionizing activators, neutral or ionic, such as tri (n-butyl) ammonium tetrakis (pentafluorophenyl) boron or a thsperfluorophenyl boron metalloid precursor that would ionize the neutral metallocene-type catalyst compound.

In one embodiment, an activation method using ionizing ionic compounds not containing an active proton but capable of producing both a bulky ligand metallocene-type catalyst cation and a non-coordinating anion are also contemplated, and are described in EP-A- 0 426 637, EP-A- 0 573 403 and U.S. Patent No. 5,387,568.

There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5,391,793, 5,391,529, 5,693,838, 5,731,253, 5,731,451 5,744,656 and European publications EP-A-0 561 476, EP-B1-0 279 586 and EP-A-0 594-218, and PCT publication WO 94/10180.

Ionizing compounds may contain an active proton, or some other cation associated with but not coordinated to or only loosely coordinated to the remaining ion of the ionizing compound. Such compounds are described in European publications EP-A-0 570 982, EP-A-0 520 732, EP-A-0 495 375, EP-A-500 944, EP-A-0 277 003 and EP-A-0 277 004, and U.S. Patent Nos. 5,153,157, 5,198,401, 5,066,741, 5,206,197, 5,241,025, 5,384,299 and 5,502,124.

Other activators include those described in PCT publication WO 98/07515 such as tris (2, 2', 2"- nonafluorobiphenyl) fluorpatuminate, which publication is fully incorporated herein by reference. Combinations of activators are also contemplated by the invention, for example, alumoxanes and ionizing activators in combinations, see for example, PCT publications WO 94/07928 and WO 95/14044 and U.S. Patent Nos. 5,153,157 and 5,453,410. WO 98/09996 describes activating metallocene-type catalyst compounds with perchlorates, periodates and iodates including their hydrates. WO 98/30602 and WO 98/30603 describe the use of lithium (2,2'-bisphenyl-ditrimethylsilicate)•4THF as an activator for a metallocene-type catalyst compound. Also, methods of activation such as using radiation (see EP-B1-0 615 981), electro-chemical oxidation, and the like are also contemplated as activating methods for the purposes of rendering the neutral metallocene-type catalyst compound or precursor to a metallocene-type cation capable of polymerizing olefins.

It is also within the scope of this invention that the above described metallocene-type catalyst compounds can be combined with one or more of the catalyst compounds represented by formulas (I) through (VII) with one or more activators or activation methods described above.

It is further contemplated by the invention that other catalysts can be combined with the metallocene-type catalyst compounds of the invention. For example, see U.S. Patent Nos. 4,937,299,4,935,474,5,281,679, 5,359,015, 5,470,811, and 5,719,241. It is also contemplated that any one of the metallocene-type catalyst compounds of the invention having at least one fluoride or fluorine containing leaving group.

In another embodiment of the invention one or more metallocene-type catalyst compounds or catalyst systems may be used in combination with one or more conventional-type catalyst compounds or catalyst systems. Non-limiting examples of mixed catalysts and catalyst systems are described in U.S. Patent Nos. 4,159,965, 4,325,837, 4,701,432, 5,124,418, 5,077,255, 5,183,867, 5,391,660, 5,395,810, 5,691,264, 5,723,399 and 5,767,031 and PCT Publication WO 96/23010 published August 1, 1996,

### Method for Supporting

The above described metallocene-type catalyst compounds and catalyst systems may be combined with one or more support materials or carriers using one of the support methods well known in the art or as described below. In the preferred embodiment, the method of the invention uses a polymerization catalyst in a supported. form. For example, in a most preferred embodiment, a metallocene-type catalyst compound or catalyst system is in a supported form, for example deposited on, contacted with, or incorporated within, adsorbed or absorbed in, or on, a support or carrier.

The terms "support" or "carrier" are used interchangeably and are any support material, preferably a porous support material, for example, talc, inorganic oxides and inorganic chlorides. Other carriers include resinous support materials such as polystyrene, functionalized or crosslinked organic supports, such as polystyrene divinyl benzene polyolefins or polymeric compounds, zeolites, clays, or any other organic or inorganic support material and the like, or mixtures thereof.

The preferred carriers are inorganic oxides that include those Group 2, 3, 4, 5, 13 or 14 metal oxides. The preferred supports include silica, alumina, silica-alumina, magnesium chloride, and mixtures thereof. Other useful supports include magnesia, titania, zirconia, montmorillonite (EP-B1 0 511 665). Also, combinations of these support materials may be used, for example, silica-chromium, silica-alumina, silica-titania.

It is preferred that the carrier, most preferably an inorganic oxide, has a surface area in the range of from about 10 to about 700 m²/g, pore volume in the range of from about 0.1 to about 4.0 cc/g and average particle size in the range of from about 5 to about 500 µm. More preferably, the surface area of the carrier is in the range of from about 50 to about 500 m²/g, pore volume of from about 0.5 to about 3.5 cc/g and average particle size of from about 10 to about 200 µm. Most preferably the surface area of the carrier is in the range is from about 100 to about 400 m²/g, pore volume from about 0.8 to about 3.0 cc/g and average particle size is from about 5 to about 100 µm. The average pore size of the carrier of the invention typically has pore size in the range of from 10 to 1000Å, preferably 50 to about 500Å, and most preferably 75 to about 350Å.

Examples of supporting the metallocene-type catalyst systems of the invention are described in U.S. Patent Nos. 4,701,432, 4,808,561, 4,912,075, 4,925,821. 4.937,217,5,008,228,5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, 5,698,487, 5,714,424, 5,723,400, 5,723,402, 5,731,261, 5,759,940, 5,767,032 and 5,770,664 and PCT publications WO 95/32995, WO 95/14044, WO 96/06187 and WO 97/02297.

In one embodiment, the metallocene-type catalyst compounds of the invention may be deposited on the same or separate supports together with an activator, or the activator may be used in an unsupported form, or may be deposited on a support different from the supported metallocene-type catalyst compounds of the invention, or any combination thereof.

There are various other methods in the art for supporting a polymerization catalyst compound or catalyst system of the invention. For example, the metallocene-type catalyst compound of the invention may contain a polymer bound ligand as described in U.S. Patent Nos. 5,473,202 and 5,770,755; the metallocene-type catalyst system of the invention may be spray dried as described in U.S. Patent No. 5,648,310; the support used with the metallocene-type catalyst system of the invention is functionalized as described in European publication EP-A-0 802 203 or at least one substituent or leaving group is selected as described in U.S. Patent No. 5,688,880.

In a preferred embodiment, the invention provides for a supported metallocene-type catalyst system that includes an antistatic agent or surface modifier that is used in the preparation of the supported catalyst system as described in PCT publication WO 96/11960. The catalyst systems of the invention can be prepared in the presence of an olefin, for example hexene-1.

A preferred method for producing the supported metallocene-type catalyst system of the invention is described below and is described in and PCT publications WO 96/00245 and WO 96/00243 both published January 4, 1996. In this preferred method, the metallocene-type catalyst compound is slurried in a liquid to form a metallocene solution and a separate solution is formed containing an activator and a liquid. The liquid may be any compatible solvent or other liquid capable of forming a solution or the like with the metallocene-type catalyst compounds and/or activator of the invention. In the most preferred embodiment the liquid is a cyclic aliphatic or aromatic hydrocarbon, most preferably toluene. The metallocene-type catalyst compound and activator solutions are mixed together and added to a porous support or the porous support is added to the solutions such that the total volume of the metallocene-type catalyst compound solution and the activator solution or the metallocene-type catalyst compound and activator solution is less than four times the pore volume of the porous support, more preferably less than three times, even more preferably less than two times; preferred ranges being from 1.1 times to 3.5 times range and most preferably in the 1.2 to 3 times range.

Procedures for measuring the total pore volume of a porous support are well known in the art. Details of one of these procedures is discussed in Volume 1 , *Experimental Methods in Catalylic Research* (Academic Press, 1968) (specifically see pages 67-96). This preferred procedure involves the use of a classical BET apparatus for nitrogen absorption. Another method well known in the art is described in Innes, *Total Porosity and Particle Density of Fluid Catalysts By Liquid Titration,* Vol. 28, No. 3, Analytical Chemistry 332-334 (March, 1956).

The mole ratio of the metal of the activator component to the metal of the supported metallocene-type catalyst compounds are in the range of between 0.3:1 to 1000:1, preferably 20:1 to 800:1, and most preferably 50:1 to 500:1. Where the activator is an ionizing activator such as those based on the anion tetrakis(pentafluorophenyl)boron, the mole ratio of the metal of the activator component to the metal component of the metallocene-type catalyst is preferably in the range of between 0.3:1 to 3:1. Where an unsupported metallocene-type catalyst system is utilized, the mole ratio of the metal of the activator component to the metal of the metallocene-type catalyst compound is in the range of between 0.3:1 to 10,000:1, preferably 100:1 to 5000:1, and most preferably 500:1 to 2000:1.

In one embodiment of the invention, olefin(s), preferably C₂ to C₃₀ olefin(s) or alpha-olefin(s), preferably ethylene or propylene or combinations thereof are prepolymerized in the presence of the metallocene-type catalyst system of the invention prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371.

In one embodiment the polymerization catalyst is used in an unsupported form, preferably in a liquid form such as described in U.S. Patent Nos. 5,317,036 and 5,693,727 and European publication EP-A-0 593 083. The polymerization catalyst in liquid form can be fed to a reactor as described in PCT publication WO 97/46599.

### Carbonyl Compounds

Carbonyl compounds are well known in the art. For the purposes of this patent specification and appended claims a carbonyl compound is any organic carbonyl compound having the general formula:

R(C=O)ₙR' (A)

where n is 1 or 2, preferably n is 2, and R and R' can be the same or different and have up to 100 non-hydrogen atoms, preferably from 1 to 50 carbon atoms, that are optionally substituted with heteroatoms or substituents. The R and R' may be branched or unbranched, saturated or unsaturated aliphatic or cycloaliphatic groups or aromatic groups or mixtures of aliphatic or aromatic groups. In one embodiment, more than one carbonyl group is present in the same molecule. Non-limiting examples of these diketones include aromatic diketones, where in formula (A) above n is 2.

In an embodiment, when R or R' is a hydrogen atom, the resulting compound is an aldehyde, or when R or R' is an -OH group, the resulting compound is a carboxylic acid, or when R or R' is an -OR" group where R" is as defined above as having from 1 to 50 carbon atoms, the resulting compound is a carboxylic ester.

Non-limiting examples include, but are not limited to, acetone, acetophenone, methyl octyl ketone, benzophenone, 9-fluorenone, 2-3 butandione, benzil, acetaldehyde, decanaldehyde and benzaldehyde, acetic acid, decanoic acid, benzoic acid, methyl acetate, decyl acetate, phenyl acetate, methyl decanoate, decyl decanoate, phenyl decanoate, methyl benzoate, decyl benzoate, phenyl benzoate.

Non-limiting commercially available carbonyl compounds for example benzil and the like are available from Aldrich, Milwaukee, Wisconsin. Other carbonyl compounds include fluorinated benzils as described in U.S. Patent No. 5,463,135. In an embodiment, the carbonyl compounds of the invention include diaryl ketones and α-diketones as described in U.S. Patent Nos. 4,931,594 and 4,110,184. Non-limiting examples include fluorenone, anthrone, xanthone, thioxanthone, phenanthrenequinone, biacetyl, camphorquinine and acenaphthacene.

The most preferred carbonyl compound is a diaryl ketone, preferably a diphenyldiketone, most specifically benzil.

In one embodiment the carbonyl compound of the invention has a melting point above 50 °C, most preferably above 80 °C. Non-limiting examples of carbonyl compounds having melting points greater than 80 °C include benzil, 9-fluorinone and 2-carboxybenzaldehyde.

In an embodiment of the invention, more than one carbonyl compound is utilized.

The carbonyl compound in one embodiment may be combined with antistatic agents such as fatty amines, for example, Kemamine AS 990/2 zinc:.additive, a blend of ethoxylated stearyl amine and zinc stearate, or Kemamine AS 990/3, a blend of ethoxylated stearyl amine, zinc stearate and octadecyl-3,5-di-tert-butyl-4-hydroxyhydrocinnamate. Both these blends are available from Witco Corporation, Memphis, Tennessee. In another embodiment, the carbonyl compound can be combined with a carboxylic acid salt of a metal ester, for example aluminum carboxylates such as aluminum mono, di- and tri- stearates, aluminum octoates, oleates and cyclohexylbutyrates.

One in the art recognizes that depending on the catalyst system and the carbonyl compound used certain conditions of temperature and pressure would be required to prevent, for example, a loss in the activity of the catalyst system.

In one embodiment of the method of the invention the carbonyl compound is contacted with the catalyst system, preferably a supported metallocene-type catalyst system under ambient temperatures and pressures. Preferably the contact temperature for combining the polymerization catalyst and the carbonyl compound is in the range of from 0 °C to about 100°C, more preferably from 15°C to about 75 °C, most preferably at about ambient temperature and pressure.

In a preferred embodiment, the contacting of the polymerization catalyst and the carbonyl compound is performed under an inert gaseous atmosphere, such as nitrogen. However, it is contemplated that the combination of the polymerization catalyst and the carbonyl compound may be performed in the presence of olefin(s), solvents, hydrogen and the like.

In one embodiment of the method of the invention, the polymerization catalyst and the carbonyl compound are combined in the presence of a liquid, for example the liquid may be a mineral oil, toluene, hexane, isobutane or a mixture thereof. In a more preferred method the carbonyl compound is combined with a polymerization catalyst that has been formed in a liquid, preferably in a slurry, or combined with a substantially dry or dried, polymerization catalyst that has been placed in a liquid and reslurried.

In an embodiment, the contact time for the carbonyl compound and the polymerization catalyst may vary depending on one or more of the conditions, temperature and pressure, the type of mixing apparatus, the quantities of the components to be combined, and even the mechanism for introducing the polymerization catalyst/carbonyl compound combination into the reactor.

Preferably, the polymerization catalyst preferably supported on a carrier, is contacted with a carbonyl compound for a period of time greater than a second, preferably from about 1 minute to about 48 hours, more preferably from about 10 minutes to about 10 hours, and most preferably from about 30 minutes to about 6 hours. The period of contacting refers to the mixing time only.

In an embodiment, the ratio of the weight of the carbonyl compound to the weight of the transition metal of the catalyst compound is in the range of from about 0.01 to about 1000 weight percent, preferably in the range of from 1 to about 100, more preferably in the range of from about 2 to about 50, and most preferably in the range of from 4 to about 20. In one embodiment the ratio of the weight of the carbonyl compound to the weight of the transition metal of the catalyst compound is in the range of from about 2 to about 20, more preferably in the range of from about 2 to about 12, and most preferably in the range of from 4 to about 10.

In another embodiment, the weight percent of the carbonyl compound based on the total weight of the polymerization catalyst is in the range of from about 0.5 weight percent to about 500 weight percent, preferably in the range of from 1 weight percent to about 25 weight percent, more preferably in the range of from about 2 weight percent to about 12 weight percent, and most preferably in the range of from about 2 weight percent to about 10 weight percent. In another embodiment, the weight percent of the carbonyl compound based on the total weight of the polymerisation catalyst is in the range of from 1 to about 50 weight percent, preferably in the range of from 2 weight percent to about 30 weight percent, and most preferably in the range of from about 2 weight percent to about 20 weight percent.

Mixing techniques and equipment contemplated for use in the invention are well known. Mixing techniques may involve any mechanical mixing means, for example shaking, stirring, tumbling, and rolling. Another technique contemplated involves the use of fluidization, for example in a fluid bed reactor vessel where circulated gases provide the mixing. Non-limiting examples of mixing equipment for combining, in the most preferred embodiment a solid polymerization catalyst and a solid carbonyl compound, include a ribbon blender, a static mixer, a double cone blender, a drum tumbler, a drum roller, a dehydrator, a fluidized bed, a helical mixer and a conical screw mixer.

In an embodiment of the invention, a supported metallocene-type catalyst, is tumbled with a carbonyl compound for a period of time such that a substantial portion of the supported catalyst is intimately mixed and/or substantially contacted with the carbonyl compound.

In a preferred embodiment of the invention the catalyst system is supported on a carrier, preferably the supported catalyst system is substantially dried, preformed, substantially dry and/or free flowing. In an especially preferred embodiment of the invention, the preformed supported catalyst system is contacted with at least one carbonyl compound. The carbonyl compound may be in solution or slurry or in a dry state, preferably the carbonyl compound is in a substantially dry or dried state. In the most preferred embodiment, the carbonyl compound is contacted with a supported catalyst system, in a rotary mixer under a nitrogen atmosphere, most preferably the mixer is a tumble mixer, or in a fluidized bed mixing process, in which the polymerization catalyst and the carbonyl compound are in a solid state, that is they are both substantially in a dry state or in a dried state.

In an embodiment of the invention a metallocene-type catalyst compound, is contacted with a carrier to form a supported catalyst compound. In this method, an activator or a cocatalyst for the catalyst compound is contacted with a separate carrier to form a supported activator or supported cocatalyst. It is contemplated in this particular embodiment of the invention, that a carbonyl compound is then mixed with the supported catalyst compound or the supported activator or cocatalyst, in any order, separately mixed, simultaneously mixed, or mixed with only one of the supported catalyst, or preferably the supported activator prior to mixing the separately supported catalyst and activator or cocatalyst.

In another embodiment, the polymerization catalyst/carbonyl compound may be contacted with a liquid, such as mineral oil and introduced to a polymerization process in a slurry state. In this particular embodiment, it is preferred that the polymerization catalyst is a supported polymerization catalyst.

In an embodiment, the invention provides for co-injecting an unsupported polymerization catalyst and a carbonyl compound into the reactor. In one embodiment the polymerization catalyst is used in an unsupported form, preferably in a liquid form such as described in U.S. Patent Nos. 5,317,036 and 5,693,727 and European publication EP-A-0 593 083. The polymerization catalyst in liquid form can be fed with a carbonyl compound to a reactor using the injection methods described in PCT publication WO 97/46599.

Where a carbonyl compound and an unsupported metallocene-type catalyst system combination is utilized, the mole ratio of the metal of the activator component to the metal of the bulky ligand metallocene-type catalyst compound is in the range of between 0.3:1 to 10,000:1, preferably 100:1 to 5000:1, and most preferably 500:1 to 2000:1.

In one embodiment, the polymerization catalyst and the carbonyl compound have a productivity greater than 1500 grams of polymer per gram of catalyst, preferably greater than 2000 grams of polymer per gram of catalyst, more preferably greater than 2500 grams of polymer per gram of catalyst and most preferably greater than 3000 grams of polymer per gram of catalyst.

In another embodiment, the polymerization catalyst and the carbonyl compound, have a productivity greater than 2000 grams of polymer per gram of catalyst, preferably greater than 3000 grams of polymer per gram of catalyst, more preferably greater than 4000 grams of polymer per gram of catalyst and most preferably greater than 5000 grams of polymer per gram of catalyst.

In one embodiment, the polymerization catalyst has a reactivity ratio generally less than 2, more typically less than 1. Reactivity ratio is defined to be the mole ratio of comonomer to monomer entering the reactor, for example as measured in the gas composition in a gas phase process, divided by the mole ratio of the comonomer to monomer in the polymer product being produced. In a preferred embodiment, the reactivity ratio is less than 0.6, more preferably less than 0.4, and most preferably less than 0.3. In the most preferred embodiment, the monomer is ethylene and the comonomer is an olefin having 3 or more carbon atoms, more preferably an alpha-olefin having 4 or more carbon atoms, and most preferably an alpha-olefin selected from the group consisting of butene-1, 4-methyl-pentene-1, pentene-1, hexene-1 and octene-1.

In another embodiment of the invention, when transitioning from a first polymerization catalyst to a second polymerization catalyst, preferably where the second polymerization catalyst is a bridged metallocene-type catalyst compound, it would be preferable during the transition to use a catalyst composition of a carbonyl compound combined with a bridged metallocene-type catalyst.

When starting up a polymerization process, especially a gas phase process, there is a higher tendency for operability problems to occur. Thus, it is contemplated in the present invention that a polymerization catalyst and carbonyl compound mixture is used on start-up to reduce or eliminate start-up problems. Furthermore, it also contemplated that once the reactor is operating in a stable state, a transition to the same or a different polymerization catalyst without the carbonyl compound can be made.

In another embodiment, during a polymerization process that is or is about to be disrupted, a polymerization catalyst/carbonyl compound mixture of the invention could be transitioned to. This switching of polymerization catalysts is contemplated to occur when operability problems arise. Indications of operability problems are well known in the art. Some of which in a gas phase process include temperature excursions in the reactor, unexpected pressure changes, excessive static generation or unusually high static spikes, chunking, sheeting and the like. In an embodiment, the carbonyl compound may be added directly to the reactor, particularly when operability problems arise.

It is contemplated that using the polymerization catalyst combined with a carbonyl compound of the invention it is easier to produce fractional melt index and higher density polymers. In one embodiment, the invention provides for a process for polymerizing olefin(s) in a reactor in the presence of a polymerization catalyst in combination with a carbonyl compound to produce a polymer product having a melt index less than about 1 dg/min and a density greater than 0.920 g/cc, more preferably the polymer product has a melt index less than about 0.75 dg/min and a density greater than 0.925 g/cc. Preferably the process is a gas phase process and the polymerization catalyst includes a carrier.

It is contemplated that using the combination polymerization catalyst/ carbonyl compound of the invention, transitioning to one of the more difficult grades of polymers would be simpler. Thus, a process for polymerizing olefin(s) in the presence of a first catalyst composition, under steady state conditions, preferably gas phase process conditions, produces a first polymer product. The first polymer product having a density greater than 0.87 g/cc, preferably greater than 0.900 g/cc, more preferably greater than 0.910 g/cc, and a melt index in the range of from 1 dg/min to about 200 dg/min, preferably in the range of greater than 1 dg/min to about 100 dg/min, more preferably from greater than 1 dg/min to about 50 dg/min, most preferably from greater than 1 dg/min to about 20 dg/min. This process further comprises the step of transitioning to a second catalyst composition to produce second polymer product having a density greater than 0.920 g/cc, preferably greater than 0.925 g/cc, and a melt index less than 1 dg/min, preferably less than 0.75 dg/min. The second catalyst composition comprising, in combination, a metallocene-type catalyst, and a carbonyl compound. It is also possible to transition from a first polymer product having an I₂₁/I₂ (described below) of less than 25 to a second polymer product having an I₂₁/I₂ greater than 25, preferably greater than 30, and even more preferably greater than 35.

In yet another embodiment, the process of the invention involves alternating between a first catalyst composition comprising a first polymerization catalyst/carbonyl compound mixture and a catalyst composition of a second polymerization catalyst without a carbonyl compound to improve the overall process operability. In a further embodiment, the first and second catalyst compositions described above can be used simultaneously, for example as a mixture or injected into a reactor separately. In any of these embodiment, the first and second polymerization catalysts may be the same or different.

### Polymerization Process

The polymerization process of the invention may be operated over a wide range of temperatures and pressures. The temperatures may be in the range of from -60 °C to about 280°C, preferably from 50°C to about 200°C, and the pressures employed may be in the range from 1 atmosphere to about 500 atmospheres or higher.

Polymerization processes include solution, gas phase, slurry phase and a high pressure process or a combination thereof. Particularly preferred is a gas phase or slurry phase polymerization of one or more olefins at least one of which is ethylene or propylene.

In one embodiment, the process of this invention is directed toward a solution, high pressure, slurry or gas phase polymerization process of one or more olefin monomers having from 2 to 30 carbon atoms, preferably 2 to 12 carbon atoms, and more preferably 2 to 8 carbon atoms. The invention is particularly well suited to the polymerization of two or more olefin monomers of ethylene, propylene, butene-1, pentene-1, 4-methyl-pentene-1, hexene-1, octene-1 and decene-1.

Other monomers useful in the process of the invention include ethylenically unsaturated monomers, diolefins having 4 to 18 carbon atoms, conjugated or nonconjugated dienes, polyenes, vinyl monomers and cyclic olefins. Non-limiting monomers useful in the invention may include norbornene, norbomadiene, isobutylene, isoprene, vinylbenzocyclobutane, styrenes, alkyl substituted styrene, ethylidene norbornene, dicyclopentadiene and cyclopentene.

In the most preferred embodiment of the process of the invention, a copolymer of ethylene is produced, where with ethylene, a comonomer having at least one alpha-olefin having from 4 to 15 carbon atoms, preferably from 4 to 12 carbon atoms, and most preferably from 4 to 8 carbon atoms, is polymerized in a gas phase process.

In another embodiment of the process of the invention, ethylene or propylene is polymerized with at least two different comonomers, optionally one of which may be a diene, to form a terpolymer.

In one embodiment, the invention is directed to a polymerization process, particularly a gas phase or slurry phase process, for polymerizing propylene alone or with one or more other monomers including ethylene, and/or other olefins having from 4 to 12 carbon atoms. Polypropylene polymers may be produced using the particularly bridged bulky ligand metallocene-type catalysts as described in U.S. Patent Nos. 5,296,434 and 5,278,264.

Typically in a gas phase polymerization process a continuous cycle is employed where in one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. (See for example U.S. Patent Nos. 4,543,399, 4,588,790, 5,028,670, 5,317,036, 5,352,749, 5,405,922, 5,436,304, 5,453,471, 5,462,999, 5,616,661 and 5,668,228.

The reactor pressure in a gas phase process may vary from about 100 psig (690 kPa) to about 500 psig (3448 kPa), preferably in the range of from about 200 psig (1379 kPa) to about 400 psig (2759 kPa), more preferably in the range of from about 250 psig (1724 kPa) to about 350 psig (2414 kPa).

The reactor temperature in a gas phase process may vary from about 30°C to about 120°C, preferably from about 60°C to about 115°C, more preferably in the range of from about 70°C to 110°C, and most preferably in the range of from about 70°C to about 95°C.

Other gas phase processes contemplated by the process of the invention include those described in U.S. Patent Nos. 5,627,242, 5,665,818 and 5,677,375, and European publications EP-A- 0 794 200, EP-A- 0 802 202 and EP-B- 634 421.

In a preferred embodiment, the reactor utilized in the present invention is capable and the process of the invention is producing greater than 500 lbs of polymer per hour (227 Kg/hr) to about 200,000 lbs/hr (90,900 Kg/hr) or higher of polymer, preferably greater than 1000 lbs/hr (455 Kg/hr), more preferably greater than 10,000 lbs/hr (4540 Kg/hr), even more preferably greater than 25,000 lbs/hr (11,300 Kg/hr), still more preferably greater than 35,000 lbs/hr (15,900 Kg/hr), still even more preferably greater than 50,000 lbs/hr (22,700 Kg/hr) and most preferably greater than 65,000 lbs/hr (29,000 Kg/hr) to greater than 100,000 lbs/hr (45,500 Kg/hr).

A slurry polymerization process generally uses pressures in the range of from about 1 to about 50 atmospheres and even greater and temperatures in the range of 0°C to about 120°C. In a slurry polymerization, a suspension of solid, particulate polymer is formed in a liquid polymerization diluent medium to which ethylene and comonomers and often hydrogen along with catalyst are added. The suspension including diluent is intermittently or continuously removed from the reactor where the volatile components are separated from the polymer and recycled, optionally after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used the process must be operated above the reaction diluent critical temperature and pressure. Preferably, a hexane or an isobutane medium is employed.

A preferred polymerization technique of the invention is referred to as a particle form polymerization, or a slurry process where the temperature is kept below the temperature at which the polymer goes into solution. Such technique is well known in the art, and described in for instance U.S. Patent No. 3,248,179. Other slurry processes include those employing a loop reactor and those utilizing a plurality of stirred reactors in series, parallel, or combinations thereof. Non-limiting examples of slurry processes include continuous loop or stirred tank processes. Also, other examples of slurry processes are described in U.S. Patent No. 4,613,484.

In an embodiment the reactor used in the slurry process of the invention is capable of and the process of the invention is producing greater than 2000 lbs of polymer per hour (907 Kg/hr), more preferably greater than 5000 lbs/hr (2268 Kg/hr), and most preferably greater than 10,000 lbs/hr (4540 Kg/hr). In another embodiment the slurry reactor used in the process of the invention is producing greater than 15,000 lbs of polymer per hour (6804 Kg/hr), preferably greater than 25,000 lbs/hr (11,340 Kg/hr) to about 100,000 lbs/hr (45,500 Kg/hr).

Examples of solution processes are described in U.S. Patent Nos. 4,271,060, 5,001,205, 5,236,998 and 5,589,555.

A preferred process of the invention is where the process, preferably a slurry or gas phase process is operated in the presence of a metallocene-type catalyst system of the invention and in the absence of or essentially free of any scavengers, such as triethylaluminum, trimethylaluminum, tri-isobutylaluminum and tri-n-hexylaluminum and diethyl aluminum chloride, dibutyl zinc and the like. This preferred process is described in PCT publication WO 96/08520 and U.S. Patent No. 5,712,352 and 5,763,543. In another preferred embodiment of the process of the invention, the process is operated by introducing a carbonyl compound into the reactor and/or contacting a carbonyl compound with the bulky ligand metallocene-type catalyst system of the invention prior to its introduction into the reactor.

### Polymer Product of the Invention

The polymers produced by the process of the invention can be used in a wide variety of products and end-use applications. The polymers produced by the process of the invention include linear low density polyethylene, elastomers, plastomers, high density polyethylenes, low density polyethylenes, polypropylene and polypropylene copolymers.

The polymers, typically ethylene based polymers, have a density in the range of from 0.86g/cc to 0.97 g/cc, preferably in the range of from 0.88 g/cc to 0.965 g/cc, more preferably in the range of from 0.900 g/cc to 0.96 g/cc, even more preferably in the range of from 0.905 g/cc to 0.95 g/cc, yet even more preferably in the range from 0.910 g/cc to 0.940 g/cc, and most preferably greater than 0.915 g/cc, preferably greater than 0.920 g/cc, and most preferably greater than 0.925 g/cc. Density is measured in accordance with ASTM-D-1238.

The polymers produced by the process of the invention typically have a molecular weight distribution, a weight average molecular weight to number average molecular weight (M_{w}/Mₙ) of greater than 1.5 to about 15, particularly greater than 2 to about 10, more preferably greater than about 2.2 to less than about 8, and most preferably from 2.5 to 8.

Also, the polymers of the invention typically have a narrow composition distribution as measured by Composition Distribution Breadth Index (CDBI). Further details of determining the CDBI of a copolymer are known to those skilled in the art. See, for example, PCT Patent Application WO 93/03093, published February 18, 1993.

The bulky ligand metallocene-type catalyzed polymers of the invention in one embodiment have CDBI's generally in the range of greater than 50% to 100%, preferably 99%, preferably in the range of 55% to 85%, and more preferably 60% to 80%, even more preferably greater than 60%, still even more preferably greater than 65%.

In another embodiment, polymers produced using a bulky ligand metallocene-type catalyst system of the invention have a CDBI less than 50%, more preferably less than 40%, and most preferably less than 30%.

The polymers of the present invention in one embodiment have a melt index (MI) or (I₂) as measured by ASTM-D-1238-E in the range from 0.01 dg/min to 1000 dg/min, more preferably from about 0.01 dg/min to about 100 dg/min, even more preferably from about 0.1 dg/min to about 50 dg/min, and most preferably from about 0.1 dg/min to about 10 dg/min.

The polymers of the invention in an embodiment have a melt index ratio (I₂₁/I₂) ( I₂₁ is measured by ASTM-D-1238-F) of from 10 to less than 25, more preferably from about 15 to less than 25.

The polymers of the invention in a preferred embodiment have a melt index ratio (I₂₁/I₂) (I₂₁ is measured by ASTM-D-1238-F) of from preferably greater than 25, more preferably greater than 30, even more preferably greater that 40, still even more preferably greater than 50 and most preferably greater than 65. In an embodiment, the polymer of the invention may have a narrow molecular weight distribution and a broad composition distribution or vice-versa, and may be those polymers described in U.S. Patent No. 5,798,427 incorporated herein by reference.

In yet another embodiment, propylene based polymers are produced in the process of the invention. These polymers include atactic polypropylene, isotactic polypropylene, hemi-isotactic and syndiotactic polypropylene. Other propylene polymers include propylene block or impact copolymers. Propylene polymers of these types are well known in the art see for example U.S. Patent Nos. 4,794,096, 3,248,455, 4,376,851, 5,036,034 and 5,459,117.

The polymers of the invention may be blended and/or coextruded with any other polymer. Non-limiting examples of other polymers include linear low density polyethylenes produced via conventional Ziegler-Natta and/or bulky ligand metallocene-type catalysis, elastomers, plastomers, high pressure low density polyethylene, high density polyethylenes, polypropylenes.
Polymers produced by the process of the invention and blends thereof are useful in such forming operations as film, sheet, and fiber extrusion and co-extrusion as well as blow molding, injection molding and rotary molding. Films include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, membranes in food-contact and non-food contact applications. Fibers include melt spinning, solution spinning and melt blown fiber operations for use in woven or non-woven form to make filters, diaper fabrics, medical garments, geotextiles. Extruded articles include medical tubing, wire and cable coatings, geomembranes, and pond liners. Molded articles include single and multi-layered constructions in the form of bottles, tanks, large hollow articles, rigid food containers and toys.

### EXAMPLES

In order to provide a better understanding of the present invention including representative advantages thereof, the following examples are offered.

The catalyst compound used in the Examples is a dimethylsilyl-bis(tetrahydroindenyl)zirconium dichloride (Me₂Si(H₄Ind)₂ZrCl₂) available from Albemarle Corporation, Baton Rouge, Louisiana. A typical preparation of the polymerization catalyst used in the Examples below is as follows: The (Me₂Si(H₄Ind)₂ZrCl₂) catalyst compound was supported on Crosfield ES-70 grade silica dehydrated at 600°C having approximately 1.0 weight percent water Loss on Ignition (LOI). LOI is measured by determining the weight loss of the support material which has been heated and held at a temperature of about 1000°C for about 22 hours. The Crosfield ES-70 grade silica has an average particle size of 40 microns and is available from Crosfield Limited, Warrington, England.

The first step in the manufacture of the supported bulky ligand metallocene-type catalyst above involves forming a precursor solution. 460 lbs (209 kg) of sparged and dried toluene is added to an agitated reactor after which 1060 lbs (482 kg) of a 30 weight percent methylaluminoxane (MAO) in toluene (available from Albemarle, Baton Rouge, Louisiana) is added. 947 lbs (430 kg) of a 2 weight percent toluene solution of a dimethylsilyl-bis(tetrahydroindenyl) zirconium dichloride catalyst compound and 600 lbs (272 kg) of additional toluene are introduced into the reactor. The precursor solution is then stirred at 80°F to 100°F (26.7°C to 37. 8°C) for one hour.

While stirring the above precursor solution, 850 lbs (386 kg) of 600 °C Crosfield dehydrated silica carrier is added slowly to the precursor solution and the mixture agitated for 30 min. at 80°F to 100 °F (26.7 to 37. 8 °C). At the end of the 30 min. agitation of the mixture, 240 lbs (109kg) of a 10 weight percent toluene solution of AS-990 (N,N-bis(2-hydroxyl ethyl) octadecylamine ((C₁₈H₃₇N(CH₂CH₂OH)₂) available as Kemamine AS-990 from Witco Corporation, Memphis, Tennessee, is added together with an additional 110 lbs (50 kg) of a toluene rinse and the reactor contents then is mixed for 30 min. while heating to 175°F (79°C). After 30 min. vacuum is applied and the polymerization catalyst mixture dried at 175°F (79°C) for about 15 hours to a free flowing powder. The final polymerization catalyst weight was 1200 lbs (544 kg) and had a Zr wt% of 0.35 and an Al wt% of 12.0.

The carbonyl compound used where indicated in the examples below is benzil available from Aldrich, Milwaukee, Wisconsin.

### Example 1

A 1-liter autoclave, equipped with a helical stirrer to permit efficient mixing of solids, was charged under nitrogen with 100 g dry, granular high-density polyethylene and purged with nitrogen by pressurizing and venting three times to 100 psig (689 kPag). To the reactor was then added 100 mmol triisobutyl-aluminum by syringe. The reactor was purged with ethylene by pressurizing and venting three times to 100 psig (689 kPag) and then heated to 80 °C before bringing to a final ethylene pressure of 107 psig (738 kPag).

An injection apparatus comprising a 2"( 5.1 cm) by ¼"(0.64 cm) piece of stainless steel tubing sealed on each end with ball valves and attached to a source of dry, pressurized nitrogen on one end was charged with 61 mg of the supported metallocene catalyst mixed with 6 mg dry benzil. The apparatus was attached to the reactor and the catalyst injected by opening both ball valves, allowing the nitrogen to sweep the dry catalyst into the reactor. After 30 minutes the reaction temperature was ramped to 100 °C and held for another 30 minutes. The reactor was then vented and cooled and the resin recovered. A total of 26.2g of new resin was made. After sieving through a 10 mesh screen, 3.1 g of resin was left on the screen ("rubble").

### Example 2

The procedure was exactly the same as in Example 1 except that no benzil was mixed with the catalyst but instead 12 mg benzil was charged to the granular high-density polyethylene bed immediately before adding the triisobutyl-aluminum.

### Example 3

The procedure was exactly the same as in Example 2 except that 30 mg of benzil was added to the high-density polyethylene bed immediately before adding the triisobutyl-aluminum.

### Comparative Example 4

The procedure was exactly the same as in Example 3 except that the 30 mg of benzil was added using the injection apparatus after the reaction had been underway for 20 minutes.

### Example 5

The procedure was exactly the same as in Example 1 except that 9-fluorinone was used in place of benzil.

### Example 6

The procedure was exactly the same as in Example 1 except that 2-carboxybenzaldehyde was used in place of benzil.

### Comparative Examples 7-13 (CEx 7-13)

The procedure was exactly the same as in Example 1 except that no benzil was used.

Table 1 below describes the "rubble" and "weight percent rubble" produced in each of the Examples 1-3, 5 and 6 and Comparative Examples 4 and 7-13 above. The higher the level of rubble produced the worse the operability of the process of the invention.

**Table 1**

| **Example #** | **Compound Used and Amount Used** | **Amount of Polymer (g)** | **Rubble (g)** | **Rubble (weight %)** |
|---|---|---|---|---|
| 1 | 10% benzil (1) | 17.9 | 0.3 | 2% |
| 2 | 30% benzil (2) | 24.1 | 0.4 | 2% |
| 3 | 50% benzil (2) | 17.7 | 0.3 | 2% |
| C Ex.4 | 50% benzil (3) | 13.1 | 2.5 | 19% |
| 5 | 10%-9 fluorenone (1) | 17.8 | 0.4 | 2% |
| 6 | 10% 2 carboxybenzaldehyde (1) | 17.8 | 1.3 | 7% |
| CEx 7 | None | 29.7 | 4.9 | 16% |
| CEx 8 | None | 27.5 | 0.8 | 3% |
| CEx 9 | None | 39.7 | 11 | 28% |
| CEx10 | None | 26.2 | 3.1 | 12% |
| CEx 11 | None | 38.2 | 7.6 | 20% |
| CEx 12 | None | 33.3 | 2.7 | 8% |
| CEx 13 | None | 38.0 | 12.1 | 32% |

| | | | | |
|---|---|---|---|---|
| (1) additive co-mixed with catalyst before injection | | | | |
| (2) additive added to reactor before adding calalyst | | | | |
| (3) additive added to reactor 20 minutes after adding catalyst | | | | |

From the data provided in Table 1 above the use of the carbonyl compound of the invention provides for an improved polymerization process, one that generates the least amount of rubble.

### Example 14

The procedure was exactly the same as in Example 1 except that 2- ethyl-anthraquinone was used in place of benzil and the temperature was ramped up from 90°C to 110°C instead of 80°C to 100°C.

### Comparative Examples 15 and 16 (CEx 15-16)

The procedure was exactly the same as in Example 14 except that no 2-ethylanthra-quinone was used.

Table 2 below describes the "rubble" and "weight percent rubble" and the higher the level of rubble produced the worse the operability of the process of the invention.

**Table 2**

| **Example** # | **Compound Used and Amount Used** | **Amount of Polymer (g)** | **Rubble (g)** | **Rubble (weight %)** |
|---|---|---|---|---|
| 14 | (50%) 2-ethyl-anthraquinone(3) | 32 | 1.7 | 5 |
| CEx 15 | None | 66 | 16 | 24 |
| CEx 16 | None | 76 | 14 | 19 |

While the present invention has been described and illustrated by reference to particular embodiments, those of ordinary skill in the art will appreciate that the invention lends itself to variations not necessarily illustrated herein. For example, it is contemplated that a carbonyl compound can be added to reactor in addition to being contacted with the catalyst system of the invention. It is also contemplated that the process of the invention may be used in a series reactor polymerization process. For example, a supported metallocene-type catalyst system free of a carbonyl compound is used in one reactor and a supported, bridged, metallocene-type catalyst system having been contacted with a carbonyl compound being used in another or vice-versa. It is also contemplated that a carbonyl compound may be separately supported on a carrier different from the polymerization catalyst, preferably a supported polymerization catalyst.

## Claims

1. A process for polymerizing olefin(s) in a reactor in the presence of a catalyst composition, the catalyst composition comprising a metallocene polymerization catalyst and an activator, the process comprising the steps of:
(a) introducing a first carbonyl composition to the reactor, and then
(b) introducing the catalyst composition into the reactor after step (a) and/or simultaneously introducing the catalyst composition into the reactor with step (a).

2. The process of claim 1 wherein the polymerization catalyst and the first carbonyl compound are combined to form a catalyst composition prior to introducing the catalyst composition to the reactor.

3. The process of claim 1 or claim 2, wherein the catalyst composition is supported on a carrier.

4. The process of any preceding claim wherein the first carbonyl compound is represented by the general formula:
R(C=O)ₙR'
wherein n is 1 or 2, and R and R' can be the same or different and have up to 100 non-hydrogen atoms, preferably wherein n is 2 and R and R' are the same or different and have from 1 to 50 carbon atoms.

5. The process of claim 4 wherein the first carbonyl compound is a di-ketone.

6. The process of claim 5 wherein the first carbonyl compound is an aldehyde.

7. The process of any preceding claim wherein the weight percent of the first carbonyl compound based on the total weight of transition metal present in the polymerization catalyst is in the range of from 0.01 weight percent to 100 weight percent.

8. The process of any preceding claim wherein the weight percent of the first carbonyl compound based on the total weight of the polymerisation catalyst is in the range of from 0.5 to 25 weight percent.

9. The process of any preceding claim wherein the first carbonyl compound has a melting point of greater than 50°C.

10. The process of any preceding claim which is a gas phase or slurry phase process.

11. The process of claim 10 wherein the process is a gas phase process which is carried out in a fluid bed reactor.

12. The process of any preceding claim wherein the catalyst composition further comprises a second carbonyl compound.

13. The process of claim 12 wherein the second carbonyl compound is different from the first carbonyl compound.

## Patentansprüche

1. Verfahren zum Polymerisieren von einem oder mehreren Olefinen in einem Reaktor in Anwesenheit einer Katalysatorzusammensetzung, wobei die Katalysatorzusammensetzung einen Metallocen-Polymerisationskatalysator und einen Aktivator umfasst, wobei das Verfahren die Schritte umfasst:
(a) Einbringen einer ersten Carbonylzusammensetzung in den Reaktor und dann
(b) Einbringen der Katalysatorzusammensetzung in den Reaktor nach Schritt (a) und/oder Einbringen der Katalysatorzusammensetzung in den Reaktor gleichzeitig mit Schritt (a).

2. Verfahren nach Anspruch 1, wobei der Polymerisationskatalysator und die erste Carbonylverbindung vor der Einbringung der Katalysatorzusammensetzung in den Reaktor vereint werden, um eine Katalysatorzusammensetzung zu bilden.

3. Verfahren nach Anspruch 1 oder Anspruch 2, worin die Katalysatorzusammensetzung auf einem Träger geträgert ist.

4. Verfahren nach irgendeinem vorhergehenden Anspruch, worin die erste Carbonylverbindung durch die allgemeine Formel
R(C=O)ₙR'
dargestellt ist, worin n 1 oder 2 ist und R und R' gleich oder verschieden sein können und bis zu 100 Nichtwasserstoffatome aufweisen, wobei bevorzugt n 2 ist und R und R' gleich oder verschieden sind und 1 bis 50 Kohlenstoffatome aufweisen.

5. Verfahren nach Anspruch 4, worin die erste Carbonylverbindung ein Diketon ist.

6. Verfahren nach Anspruch 5, worin die erste Carbonylverbindung ein Aldehyd ist.

7. Verfahren nach irgendeinem vorhergehenden Anspruch, worin der Gewichtsprozentsatz der ersten Carbonylverbindung auf Basis des Gesamtgewichts des in dem Polymerisationskatalysator vorhandenen Übergangsmetalls im Bereich von 0,01 Gew.-% bis 100 Gew.-% liegt.

8. Verfahren nach irgendeinem vorhergehenden Anspruch, worin der Gewichtsprozentsatz der ersten Carbonylverbindung auf Basis des Gesamtgewichts des Polymerisationskatalysators im Bereich von 0,5 bis 25 Gew.-% liegt.

9. Verfahren nach irgendeinem vorhergehenden Anspruch, worin die erste Carbonylverbindung einen Schmelzpunkt von größer als 50°C aufweist.

10. Verfahren nach irgendeinem vorhergehenden Anspruch, bei dem es sich um ein Gasphasen- oder Suspensionsphasenverfahren handelt.

11. Verfahren nach Anspruch 10, worin das Verfahren ein Gasphasenverfahren ist, das in einem Fließbettreaktor durchgeführt wird.

12. Verfahren nach irgendeinem vorhergehenden Anspruch, worin die Katalysatorzusammensetzung ferner eine zweite Carbonylverbindung umfasst.

13. Verfahren nach Anspruch 12, worin die zweite Carbonylverbindung von der ersten Carbonylverbindung verschieden ist.

## Revendications

1. Procédé de polymérisation d'oléfine(s) dans un réacteur en présence d'une composition de catalyseur, la composition de catalyseur comprenant un catalyseur de polymérisation métallocène et un activateur, le procédé comprenant les étapes consistant à :
(a) introduire une première composition de carbonyle dans le réacteur, et ensuite
(b) introduire la composition de catalyseur dans le réacteur après l'étape (a) et/ou introduire la composition de catalyseur dans le réacteur simultanément à l'étape (a).

2. Procédé selon la revendication 1, dans lequel le catalyseur de polymérisation et le premier composé carbonyle sont combinés pour former une composition de catalyseur préalablement à l'introduction de la composition de catalyseur dans le réacteur.

3. Procédé selon la revendication 1 ou la revendication 2, dans lequel la composition de catalyseur est fixée sur un support.

4. Procédé selon l'une quelconque des revendications précédentes, dans lequel le premier composé carbonyle est représenté par la formule générale :
R(C=O)ₙR'
dans laquelle n vaut 1 ou 2, et R et R' peuvent être identiques ou différents et ont jusqu'à 100 atomes non constitués par hydrogène, dans laquelle de préférence n vaut 2 et R et R' sont identiques ou différents et ont de 1 à 50 atomes de carbone.

5. Procédé selon la revendication 4, dans lequel le premier composé carbonyle est une dicétone.

6. Procédé selon la revendication 5, dans lequel le premier composé carbonyle est un aldéhyde.

7. Procédé selon l'une quelconque des revendications précédentes, dans lequel le pourcentage en poids du premier composé carbonyle basé sur le poids total du métal de transition présent dans le catalyseur de polymérisation est dans la plage de 0,01 pour cent en poids à 100 pour cent en poids.

8. Procédé selon l'une quelconque des revendications précédentes, dans lequel le pourcentage en poids du premier composé carbonyle basé sur le poids total du catalyseur de polymérisation est dans la plage de 0,5 à 25 pour cent en poids.

9. Procédé selon l'une quelconque des revendications précédentes, dans lequel le premier composé carbonyle a un point de fusion supérieur à 50°C.

10. Procédé selon l'une quelconque des revendications précédentes, qui est un procédé en phase gazeuse ou en phase en suspension.

11. Procédé selon la revendication 10, lequel est un procédé en phase gazeuse qui est conduit dans un réacteur à lit fluidisé.

12. Procédé selon l'une quelconque des revendications précédentes, dans lequel la composition de catalyseur comprend en outre un second composé carbonyle.

13. Procédé selon la revendication 12, dans lequel le second composé carbonyle est différent du premier composé carbonyle.
